# EUROPÄISCHE PATENTANMELDUNG

(11) **EP 4 538 623 A1**
(43) Veröffentlichungstag der Anmeldung: **16.04.2025**
(21) Anmeldenummer: 24193645.9
(22) Anmeldetag: 08.08.2024
(51) Int. Cl.: F27B 5/02, F27B 5/04, F27B 17/00, F27D 7/04, F27D 17/10, F27D 19/00

(54) **VERFAHREN ZUM BETREIBEN VON WENIGSTENS ZWEI CHARGENÖFEN**

(30) Priorität: 12.10.2023 AT 508362023
(71) Anmelder: Wienerberger AG, 1100 Wien (AT)
(72) Erfinder: RATH, Johannes, 1100 Wien (AT); BOOT, Erik, 1100 Wien (AT); STREIBL, Bernhard, 1100 Wien (AT); VOGT, Stefan, 1100 Wien (AT)
(74) Vertreter: Gibler & Poth Patentanwälte KG

(57) **Zusammenfassung**

Es wird ein Verfahren zum Betreiben von wenigstens zwei Chargenöfen (1) vorgeschlagen, wobei jedem der Chargenöfen (1) jeweils während eines Brennvorgangs ein individueller Betriebs-Gasstrom (7) über eine jeweilige Zuleitung (5) zugeführt wird, wobei der Betriebs-Gasstrom (7) durch einen in dem Besatzraum (2) angeordneten Formlingstapel (8) strömt und mit dem Formlingstapel (8) Wärme austauscht, wobei die Ausbildung des Formlingstapels (8) derart gewählt wird, dass eine maximale zweite gemittelte Oberflächentemperatur an einem einem Gasauslass (4) zugewandten Ende (10) des Formlingstapels (8) um eine vorgebbare Brennvorgangszeit später als eine maximale erste gemittelte Oberflächentemperatur an einem einem Gaseinlass (3) zugewandten Ende (9) des Formlingstapels (8) erreicht wird, wobei der Brennvorgangsstartzeitpunkt eines zweiten Chargenofens (13) später als der Brennvorgangsstartzeitpunkt eines ersten Chargenofens (12) gewählt wird, wobei der zweite Chargenofen (13) zumindest zeitweise einen Teil des abgeführten Betriebs-Gasstroms (7) aus einer Auslassleitung (6) des ersten Chargenofens (12) verwendet.

## Beschreibung

Die Erfindung betrifft ein Verfahren zum Betreiben von wenigstens zwei Chargenöfen gemäß dem Oberbegriff des Patentanspruches 1.

Es ist bekannt, Chargenöfen und kontinuierlich betriebene Öfen zum Brennen von Formlingen, beispielsweise zur Herstellung von gebrannten keramischen Erzeugnissen, zu verwenden.

Dabei ist weiters bekannt, dass Chargenöfen bei der thermischen Behandlung von Gütern mehr Heizenergie benötigen, als kontinuierlich betriebene Öfen. Aus diesem Grund werden Chargenöfen für gewöhnlich nur zur Herstellung von hochwertigen Gütern eingesetzt. Es gibt jedoch auch Brennverfahren bei denen Chargenöfen verwendet werden müssen, um beispielsweise spezielle Eigenschaften an den Gütern herzustellen.

Aufgabe der Erfindung ist es daher ein Verfahren der eingangs genannten Art anzugeben, mit welchem die genannten Nachteile vermieden werden können, mit welchem wenigstens zwei Chargenofen energieeffizient betrieben werden können.

Erfindungsgemäß wird dies durch die Merkmale des Patentanspruches 1 erreicht.

Dadurch ergibt sich der Vorteil, dass wenigstens zwei Chargenöfen, insbesondere mehrere miteinander wechselwirkende Chargenöfen, ähnlich energieeffizient betrieben werden können, wie kontinuierlich betriebene Öfen. Durch die Steuerung der wenigstens zwei Chargenöfen anhand unterschiedlicher Brennvorgangsstartzeitpunkte und dem späteren Erreichen der maximalen zweiten gemittelten Oberflächentemperatur um die vorgebbare Brennvorgangszeit, kann Wärme, welche von dem Formlingstapel des ersten Chargenofens abgegeben wird, bei dem Brennvorgang des zweiten Chargenofens verwendet werden. Dadurch kann die Menge an Energie, welche zum Heizen und Brennen einer Vielzahl an Formlingen mit den wenigstens zwei Chargenöfen aufzuwenden ist, gegenüber herkömmlichen Chargenöfen reduziert werden. Dadurch können bereits wenigstens zwei Chargenöfen sehr energieeffizient betrieben werden, wobei durch das erfindungsgemäße Verfahren insbesondere eine Mehrzahl an miteinander wechselwirkenden Chargenöfen besonders energieeffizient betrieben werden können.

Die Erfindung betrifft weiters ein System gemäß dem Patentanspruch 11.

Die Erfindung hat daher weiters die Aufgabe ein System der eingangs genannten Art anzugeben, mit welchem die genannten Nachteile vermieden werden können, mit welchem wenigstens zwei Chargenöfen energieeffizient betrieben werden können.

Erfindungsgemäß wird dies durch die Merkmale des Patentanspruches 11 erreicht.

Die Vorteile des Systems entsprechen den Vorteilen des oben genannten Verfahrens.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein erstes Temperatur-Zeit-Diagramm bei dem Betrieb eines Chargenofens umfassend eine Soll-Gastemperaturkurve, einen Temperaturverlauf einer ersten gemittelten Oberflächentemperatur an einem ersten Ende eines Formlingstapels und eine Gastemperatur-Kurve eines Gasstroms in der Auslassleitung,
Fig. 2 eine bevorzugte Ausführungsform eines Besatzraums eines Chargenofens mit einem in dem Besatzraum angeordneten Formlingstapel,
Fig. 3 eine erste bevorzugte Ausführungsform des Systems umfassend drei Chargenöfen, eine Heißleitung, eine Kaltleitung und eine Abwärmeleitung,
Fig. 4 ein zweites Temperatur-Zeit-Diagramm für den Betrieb von drei Chargenöfen in schematischer Darstellung,
Fig. 5 eine zweite bevorzugte Ausführungsform des Systems umfassend fünf Chargenöfen, eine Heißleitung, eine erste Mitteltemperaturleitung, eine Kaltleitung und eine Abwärmeleitung,
Fig. 6 eine schematische Darstellung des Systems umfassend mehrere Chargenöfen, eine Heißleitung, eine erste Mitteltemperaturleitung und eine zweite Mitteltemperaturleitung.

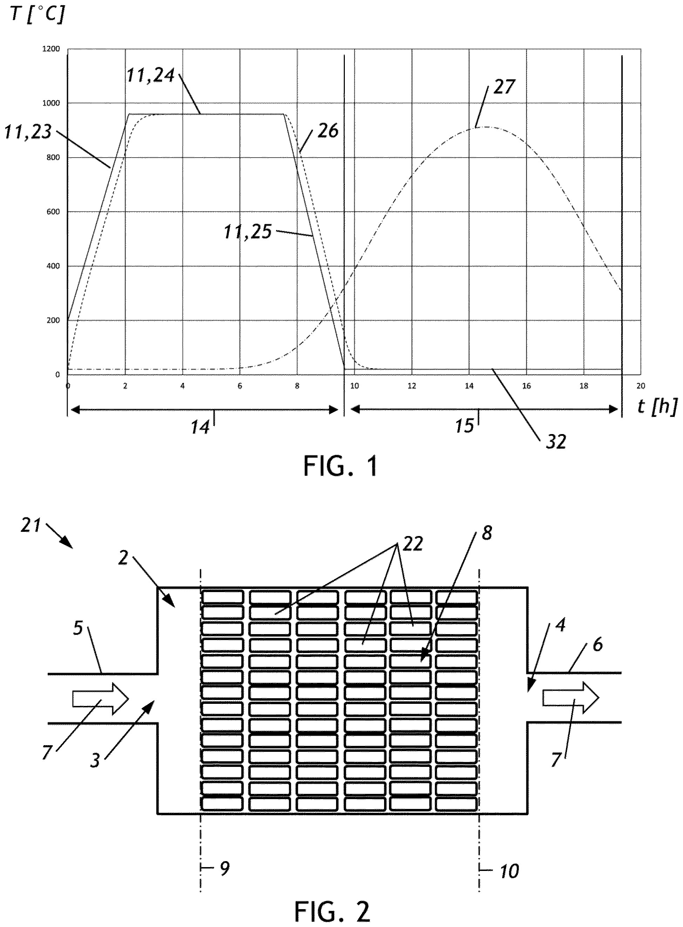

Die Fig. 2, 3, 5 und 6 zeigen zumindest Teile eines Systems 21 umfassend wenigstens zwei Chargenöfen 1 und eine Regeleinrichtung, wobei jeder der wenigstens zwei Chargenöfen 1 jeweils einen Besatzraum 2 mit einem Gaseinlass 3 und einem Gasauslass 4, eine mit dem Gaseinlass 3 verbundene Zuleitung 5 und eine mit dem Gasauslass 4 verbundene Auslassleitung 6 umfasst, wobei die Auslassleitung 6 eines ersten Chargenofens 12 der wenigstens zwei Chargenöfen 1 mit der Zuleitung 5 eines zweiten Chargenofens 13 der wenigstens zwei Chargenöfen 1 verbunden ist, wobei die Regeleinrichtung dazu ausgebildet ist die wenigstens zwei Chargenöfen 1 nach dem erfindungsgemäßen Verfahren zu betreiben.

Weiters ist ein Verfahren zum Betreiben der wenigstens zwei Chargenöfen 1 vorgesehen,
- wobei jeder der wenigstens zwei Chargenöfen 1 jeweils einen Besatzraum 2 mit einem Gaseinlass 3 und einem Gasauslass 4, eine mit dem Gaseinlass 3 verbundene Zuleitung 5 und eine mit dem Gasauslass 4 verbundene Auslassleitung 6 umfasst,
- wobei jedem der Chargenöfen 1 jeweils während eines Brennvorgangs ein individueller Betriebs-Gasstrom 7 über die jeweilige Zuleitung 5 zugeführt wird, wobei der Betriebs-Gasstrom 7 durch einen in dem Besatzraum 2 angeordneten Formlingstapel 8 strömt und mit dem Formlingstapel 8 Wärme austauscht, wobei der Formlingstapel 8 eine erste gemittelte Oberflächentemperatur an einem dem Gaseinlass 3 zugewandten ersten Ende 9 und eine zweite gemittelte Oberflächentemperatur an einem dem Gasauslass 4 zugewandten zweiten Ende 10 aufweist, wobei die Ausbildung des Formlingstapels 8 derart gewählt wird, dass die maximale zweite gemittelte Oberflächentemperatur um eine vorgebbare Brennvorgangszeit später als die maximale erste gemittelte Oberflächentemperatur erreicht wird, wobei der Brennvorgang in jedem der Chargenöfen 1 zu einem individuellen Brennvorgangstartzeitpunkt gestartet wird,
- wobei die wenigstens zwei Chargenöfen 1 den ersten Chargenofen 12 und den zweiten Chargenofen 13 umfassen,
- wobei der Brennvorgangsstartzeitpunkt des zweiten Chargenofens 13 später als der Brennvorgangsstartzeitpunkt des ersten Chargenofens 12 gewählt wird,
- wobei die Auslassleitung 6 des ersten Chargenofens 12 mit der Zuleitung 5 des zweiten Chargenofens 13 verbunden ist,
- wobei der zweite Chargenofen 13 zumindest zeitweise einen Teil des abgeführten Betriebs-Gasstroms 7 aus der Auslassleitung 6 des ersten Chargenofens 12 verwendet.

Dadurch ergibt sich der Vorteil, dass wenigstens zwei Chargenöfen 1, insbesondere mehrere miteinander wechselwirkende Chargenöfen 1, ähnlich energieeffizient betrieben werden können, wie kontinuierlich betriebene Öfen. Durch die Steuerung der wenigstens zwei Chargenöfen 1 anhand unterschiedlicher Brennvorgangsstartzeitpunkte und dem späteren Erreichen der maximalen zweiten gemittelten Oberflächentemperatur um die vorgebbare Brennvorgangszeit, kann Wärme, welche von dem Formlingstapel 8 des ersten Chargenofens 12 abgegeben wird, bei dem Brennvorgang des zweiten Chargenofens 13 verwendet werden. Dadurch kann die Menge an Energie, welche zum Heizen und Brennen einer Vielzahl an Formlingen 22 mit den wenigstens zwei Chargenöfen 1 aufzuwenden ist, gegenüber herkömmlichen Chargenöfen reduziert werden. Dadurch können bereits wenigstens zwei Chargenöfen 1 sehr energieeffizient betrieben werden, wobei durch das erfindungsgemäße Verfahren insbesondere eine Mehrzahl an miteinander wechselwirkenden Chargenöfen 1 besonders energieeffizient betrieben werden können.

Ein Chargenofen 1 ist ein Ofen zum Brennen von Formlingen 22, insbesondere von keramischen Formlingen 22. Bevorzugt ist der Chargenofen 1 zum Brennen von Ziegelformlingen ausgebildet. Bevorzugt können die Formlinge 22, Formlinge 22 von Mauerziegeln, Klinker, Verblender und/oder Dachziegeln sein. Ein Formling 22 ist ein hergestelltes Gut mit einer gewünschten Form, welches nach der Ausbildung der Form in dem Chargenofen 1 thermisch behandelt, insbesondere gebrannt, werden kann.

Der Chargenofen 1 umfasst einen Besatzraum 2 zum Brennen der Formlinge 22. Bevorzugt können die Formlinge 22 dem Besatzraum 2 über eine Klappe zugefügt werden. Während des Brennens der Formlinge 22 in dem Besatzraum 2 verweilen die Formlinge 22 für insbesondere ortsfest.

Bevorzugt kann der Chargenofen 1 auch als Kammerofen bezeichnet werden.

Jeder Chargenofen 1 der wenigstens zwei Chargenöfen 1, insbesondere der jeweilige Besatzraum 2 des jeweiligen Chargenofens 1, umfasst einen Gaseinlass 3 und einen Gasauslass 4. Der Gaseinlass 3 und der Gasauslass 4 sind derart ausgebildet, dass ein Gasstrom, insbesondere der Betriebs-Gasstrom 7, über den Gaseinlass 3 in den Besatzraum 2 gelangen kann und über den Gasauslass 4 den Besatzraum 2 verlassen kann. Dies ist beispielhaft in der Fig. 2 mittels der Pfeile, auf welches das Bezugszeichen 7 zeigt, gezeigt.

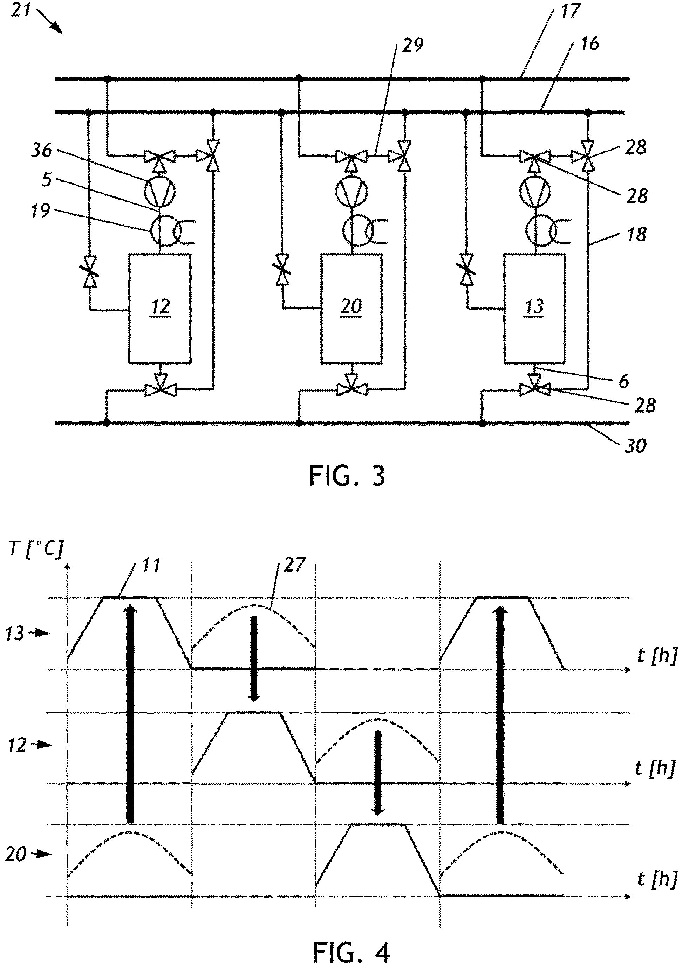

Jeder Chargenofen 1 der wenigstens zwei Chargenöfen 1 umfasst eine mit dem Gaseinlass 3 verbundene Zuleitung 5 und eine mit dem Gasauslass 4 verbundene Auslassleitung 6. Es ist vorgesehen, dass jeder Chargenofen 1 jeweils eine Zuleitung 5 und jeweils eine Auslassleitung 6 umfasst. Dies ist beispielhaft in der Fig. 3 ersichtlich.

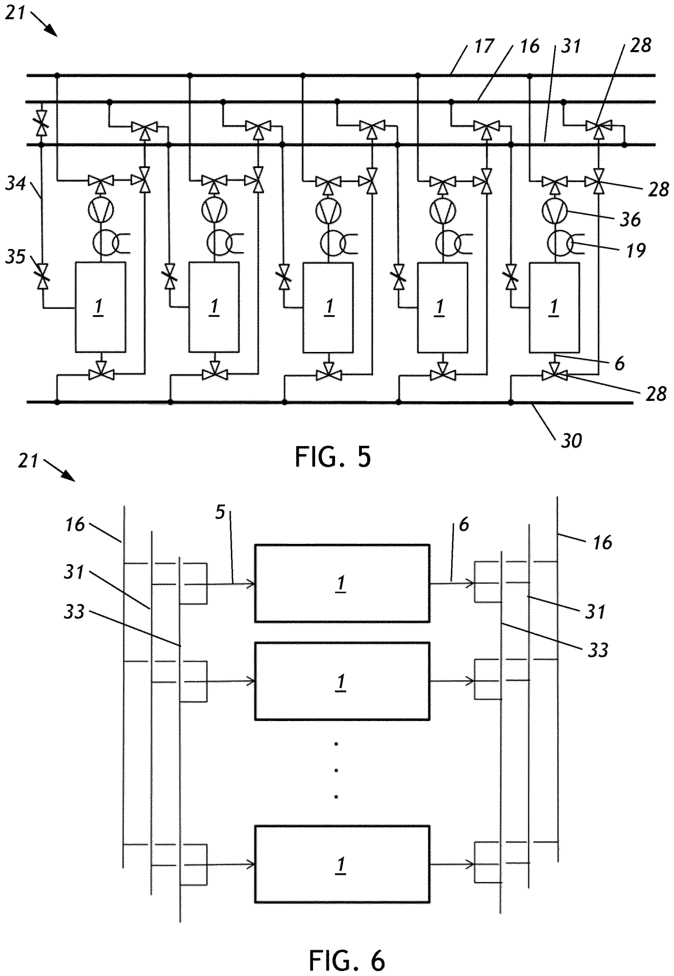

Es ist vorgesehen, dass die Auslassleitung 6 des ersten Chargenofens 12 der wenigstens zwei Chargenöfen 1 mit der Zuleitung 5 des zweiten Chargenofens 13 der wenigstens zwei Chargenöfen 1 verbunden ist. Dies ist beispielhaft in Fig. 3 und 5 ersichtlich.

Bevorzugt kann die Auslassleitung 6 des ersten Chargenofens 12 der wenigstens zwei Chargenöfen 1 mit der Zuleitung 5 des zweiten Chargenofens 13 der wenigstens zwei Chargenöfen 1 mittels einer Heißleitung 16 verbunden sein. Dies ist beispielhaft in den Fig. 3 und 5 gezeigt und ist an nachfolgender Stelle noch genauer erläutert.

Bevorzugt ist in der Zuleitung 5 des jeweiligen Chargenofens 1, insbesondere am Gaseinlass 3, ein Temperatursensor angeordnet. Bevorzugt kann die Regeleinrichtung den Temperatursensor zum Einstellen des Betriebs-Gasstroms 7 verwenden.

Jedem Chargenofen 1 der wenigstens zwei Chargenöfen 1 wird während des Brennvorgangs der individueller Betriebs-Gasstrom 7 über die jeweilige Zuleitung 5 zugeführt. Der Brennvorgang ist dabei der Vorgang bei dem die Formlinge 22 des Formlingstapels 8 gebrannt werden. Die Formlinge 22 befinden sich daher bei dem Brennvorgang bereits in dem Besatzraum 2 des jeweiligen Chargenofens 1.

Während des Brennvorgangs strömt der Betriebs-Gasstrom 7 durch den in dem Besatzraum 2 angeordneten Formlingstapel 8. Dies ist beispielhaft in Fig. 2 gezeigt. Während des Durchströmens des Formlingstapels 8 von dem Betriebs-Gasstrom 7 wird Wärme zwischen dem Formlingstapel 8, insbesondere den Formlingen 22 des Formlingstapels 8, und dem Betriebs-Gasstrom 7 ausgetauscht. Je nach Phase des Brennvorgangs wird hierbei Wärme von dem Betriebs-Gasstrom 7 auf die Formlinge 22 übertragen oder Wärme von den Formlingen 22 auf den Betriebs-Gasstrom 7 übertragen.

Dabei wird die Ausbildung des Formlingstapels 8 derart gewählt, dass die maximale zweite gemittelte Oberflächentemperatur um eine vorgebbare Brennvorgangszeit später erreicht wird, als die maximale erste gemittelte Oberflächentemperatur. Dies kann beispielsweise durch eine dichte Stapelung des Formlingstapels 8 in dem Besatzraum 2 erreicht werden. Beispielsweise wenn ein geringer Randspalt zwischen dem Formlingstapel 8 und der Besatzraumumwandung ausgebildet wird. Weiters kann dies auch durch eine Stapelung mittels speziell ausgebildeter Strömungskanäle in dem Formlingstapel 9 erreicht werden.

Besonders bevorzugt kann vorgesehen sein, dass in dem Besatzraum 2 mit dem Formlingstapel 8 ein maximaler hydraulischer Durchmesser eines Strömungskanals maximal das 10-fache, bevorzugt maximal das 5-fache, besonders bevorzugt maximal das 3-fache, der gemittelten hydraulischen Durchmesser der Strömungskanals ist. Die Strömungskanäle können hierbei der Randspalt, Kanäle zwischen den einzelnen Formlingen sowie Kanäle durch die Formlinge, beispielsweise bei Lochziegel, sein. Durch das Vermeiden zu großer Unterschiede in den hydraulischen Durchmessern der einzelnen Strömungskanäle kann erreicht werden, dass der Betriebs-Gasstrom 7 gleichmäßig den Formlingstapel 8 durchströmt und nicht an diesem vorbei strömt, wodurch eine sehr gute Wärmeübertragung zwischen dem Formlingstapel 8 und dem Betriebs-Gasstrom 7 erreicht werden kann.

Durch diese spezielle Ausbildung des Formlingstapels 8 wird während des Brennvorgangs an dem ersten Ende 9 des Formlingstapel 8 früher eine maximale gemittelte Oberflächentemperatur erreicht als an dem zweiten Ende 10 des Formlingstapels 8. In Fig. 2 ist beispielhaft das erste Ende 9 des Formlingstapels 8, welches erste Ende 9 dem Gaseinlass 3 zugewandt ist und das zweite Ende 10 des Formlingstapels 8, welches zweite Ende 10 dem Gasauslass 4 zugewandt ist, gezeigt.

Die jeweilige gemittelte Oberflächentemperatur an den Enden 9, 10 des Formlingstapels 8 kann beispielsweise durch mehrere an den Enden 9, 10 angebrachte Temperatursensoren ermittelt werden. Dabei kann bevorzugt der Mittelwert von den mit den angebrachten Temperatursensoren gemessenen Temperaturwerten gebildet werden.

Die zweite gemittelte Oberflächentemperatur an dem zweiten Ende 10 des Formlingstapels 8 kann insbesondere im Wesentlichen der Temperatur des Betriebs-Gasstroms 7 in der Auslassleitung 6 entsprechen.

Erfindungsgemäß wird der Brennvorgangsstartzeitpunkt des zweiten Chargenofens 13, also der Zeitpunkt an dem der zweite Chargenofen 13 seinen Brennvorgang startet, später als der Brennvorgangsstartzeitpunkt des ersten Chargenofens 12 gewählt. Dadurch kann der zweite Chargenofen 13 zumindest zeitweise einen Teil des abgeführten Betriebs-Gasstroms 7 aus der Auslassleitung 6 des ersten Chargenofens 12 verwenden. Dies kann dadurch erreicht werden, da die zweite gemittelte Oberflächentemperatur später als die erste gemittelte Oberflächentemperatur erreicht wird. Wenn also die Formlinge 22 des Formlingstapels 8 an dem ersten Ende 9 bereits ihre Maximaltemperatur erreicht haben, befinden sich die Formlinge 22 des Formlingstapels 8 an dem zweiten Ende 10 immer noch in der "Aufheizphase". Die Temperaturverläufe der gemittelten Oberflächentemperaturen der Formlinge 22 an verschiedenen Stellen der Formlinge 22 zwischen dem ersten Ende 9 und dem zweiten Ende 10 können daher auch als Art "Temperaturwelle" betrachtet werden, welche sich von dem ersten Ende 9 des Formlingstapels 8 zu dem zweiten Ende 10 des Formlingstapels 8 ausbreitet.

Während des Brennvorganges bildet sich daher ein sich von dem ersten Ende 9 zu dem zweiten Ende 10 erstreckendes Temperaturprofil innerhalb des Formlingstapels 8 aus. Es erfolgt hierbei insbesondere keine gewollte Vergleichmäßigung der Temperatur in dem Formlingstapels 8. Der Formlingstapel 8 nimmt hierbei wie ein Regenerator die Wärmeenergie aus dem Betriebs-Gasstroms 7. Zu Beginn des Brennvorganges heizen sich als erstes die Formlinge 22 an dem ersten Ende 9 des Formlingstapels 8 auf, wobei der Betriebs-Gasstrom 7 beim weiteren Durchströmen des Formlingstapels 8 abgekühlt wird, sodass die Formlinge 22 an dem zweiten Ende 10 des Formlingstapels 8 noch kühl bleiben. Der Betriebs-Gasstrom 7 dient in weiterer Folge nicht nur der Wärmezufuhr, sondern auch dem Wärmetransport der Temperaturverteilung in dem Formlingsstapel 8 von dem ersten Ende 9 zu dem zweiten Ende 10. Bei der Zufuhr eines kalten Betriebs-Gasstroms 7 heizt sich dieser innerhalb des Formlingstapels 8 auf, wodurch ebenfalls ein Wärmetransport in dem Formlingstapel 8 von dem ersten Ende 9 zu dem zweiten Ende 10 erfolgt. Dadurch kann die Temperatur des Betriebs-Gasstrom 7 von dem Gaseinlass 3 und dem Gasauslass 4 zum Teil voneinander entkoppelt werden, sodass eine zeitliche Verzögerung zwischen der Zufuhr und der Entnahme von Wärme aus dem Formlingstapel 8 erreicht werden kann. Diese zeitliche Verzögerung kann in weiterer Folge dazu verwendet werden, in dem Formlingstapel 8 gespeicherte Wärmeenergie des ersten Chargenofens 12 zu verwendet, um den Brennvorgang in dem zweiten Chargenofen 13 zu betreiben.

Insbesondere kann vorgesehen sein, dass der Formlingstapel 8 mindestens 50%, bevorzugt mindestens 70%, besonders bevorzugt mindestens 90%, der gesamten Wärmeenergie des Betriebs-Gasstroms 7 während eines Brennvorganges aufnehmen kann.

Bevorzugt kann vorgesehen sein, dass der Betriebs-Gasstrom 7 in dem jeweiligen Besatzraum 2 lediglich direkt von dem Gaseinlass 3 durch den Formlingstapel 8 zu dem Gasauslass 4 strömt, insbesondere zwangsgeströmt wird. Eine Umwälzung des Betriebs-Gasstroms 7 in dem Besatzraum 2 findet daher bevorzugt nicht statt.

Besonders bevorzugt kann vorgesehen sein, dass der individuelle Betriebs-Gasstrom 7 für jeden Chargenofen 1 gemäß einer Soll-Gastemperatur einer Soll-Gastemperatur-Kurve 11 mittels einer Regeleinrichtung eingestellt wird und die Soll-Gastemperatur-Kurve 11 eine aktive Brennphase 14 und eine passive Brennphase 15 umfasst. In der aktiven Brennphase 14 wird ein erhitzter Betriebs-Gasstroms 7 dem Besatzraum 2 zugeführt, um von außen Wärmeenergie in den Besatzraum 2 einzubringen.Weiters kann vorgesehen sein, dass die Soll-Gastemperatur-Kurve 11 in der passiven Brennphase 15 lediglich eine Kühlzeit 32 umfasst. Während in der aktiven Brennphase 14 Wärmeenergie durch den Betriebs-Gasstroms 7 in den Besatzraum 2, und damit auch in den Formlingstapels 8, eingebracht wird, wird in der passiven Brennphase 15 kühle Luft in den Besatzraum 2 eingebracht, wobei sich die vorhandene Wärme aus der aktiven Brennphase 14 durch den Formlingstapel 8 bewegt und am Ende der passiven Brennphase 15 den Besatzraum 2 wieder verlässt. Dadurch, dass jeder Chargenofen 1 gemäß einer individuellen Soll-Gastemperatur-Kurve 11 betrieben wird, können die Temperaturverläufe bei den wenigstens zwei Chargenöfen 1 individuell gewählt werden und dennoch Energie von dem einen Chargenofen 1 bei dem anderem Chargenofen 1 verwendet werden. Dadurch kann in Summe der Energiebedarf bei den Brennen von Formlingen 22 mit den wenigstens zwei Chargenöfen 1 reduziert werden.

Bevorzugt kann vorgesehen sein, dass die aktive Brennphase 14 der Soll-Gastemperatur-Kurve 11 eine Aufheizzeit 23, eine Haltezeit 24 und eine Abkühlzeit 25 umfasst. Dadurch kann ein symmetrischer Verlauf der Soll-Gastemperatur-Kurve 11 erhalten werden, wodurch die Effizienz der wenigstens zwei Chargenöfen 1, insbesondere die Kombination von mehreren Chargenöfen 1, welche miteinander wärmetechnisch gekoppelt sind, erhöht werden kann.

Die Aufheizzeit 23, die Haltezeit 24 und die Abkühlzeit 25 sind dabei Zeitdauern mit vorgebbarer Länge. Dies ist beispielhaft in Fig. 1 gezeigt, wobei drei Temperaturverläufe ersichtlich sind. Die durchgehende Linie zeichnet dabei beispielhaft die Soll-Gastemperatur-Kurve 11 mit der aktiven Brennphase 14 und der passiven Brennphase 15. Weiters ist in der aktiven Brennphase 14 die Aufheizzeit 23, die Haltezeit 24 und die Abkühlzeit 25 der Soll-Gastemperatur-Kurve 11 ersichtlich. Die gepunktete Linie zeichnet dabei beispielhaft den Temperaturverlauf 26 der ersten gemittelten Oberflächentemperatur an dem ersten Ende 9 des Formlingstapels 8. Die strichpunktierte Linie zeichnet dabei beispielhaft die Gastemperatur-Kurve 27 des Gasstroms in der Auslassleitung 6, also den Temperaturverlauf des abgeführten Betriebs-Gasstroms 7. Diese Gastemperatur-Kurve 27 des Gasstroms in der Auslassleitung 6 entspricht im Wesentlichen dem Temperaturverlauf der zweiten gemittelten Oberflächentemperatur an dem zweiten Ende 10 des Formlingstapels 8.

Bevorzugt ist vorgesehen, dass die Aufheizzeit 23 der aktiven Brennphase 14 im Wesentlichen der Abkühlzeit 25 der aktiven Brennphase 14 entspricht. Dies ist beispielhaft in Fig. 1 ersichtlich.

Besonders bevorzugt kann vorgesehen sein, dass die Dauer der aktiven Brennphase 14 im Wesentlichen der Dauer der passiven Brennphase 15 entspricht. Dadurch kann ein besonders effizienter Betrieb des Chargenofens 1, insbesondere mehrerer miteinander gekoppelter Chargenöfen 1, erreicht werden.

Bevorzugt kann vorgesehen sein, dass das Verhältnis zwischen der Gesamtmasse des den Besatzraum 2 durchströmenden Betriebs-Gasstrom 7 und der Masse des Formlingstapels 8 in der aktiven Brennphase 14 mindestens 50%, bevorzugt mindestens 70%, besonders bevorzugt mindestens 90%, beträgt.

Bevorzugt kann vorgesehen sein, dass das Verhältnis zwischen der Gesamtmasse des den Besatzraum 2 durchströmenden Betriebs-Gasstrom 7 und der Masse des Formlingstapels 8 in der aktiven Brennphase 14 maximal 200%, bevorzugt maximal 140%, besonders bevorzugt maximal 110%, beträgt.

Bevorzugt kann vorgesehen sein, dass das Verhältnis zwischen der Gesamtmasse des den Besatzraum 2 durchströmenden Betriebs-Gasstrom 7 und der Masse des Formlingstapels 8 in der passiven Brennphase 15 mindestens 50%, bevorzugt mindestens 70%, besonders bevorzugt mindestens 90%, beträgt.

Bevorzugt kann vorgesehen sein, dass das Verhältnis zwischen der Gesamtmasse des den Besatzraum 2 durchströmenden Betriebs-Gasstrom 7 und der Masse des Formlingstapels 8 in der passiven Brennphase 15 maximal 200%, bevorzugt maximal 140%, besonders bevorzugt maximal 110%, beträgt.

Bevorzugt kann vorgesehen sein, dass das Verhältnis zwischen der Gesamtmasse des den Besatzraum 2 durchströmenden Betriebs-Gasstrom 7 in der aktiven Brennphase 14 zu der passiven Brennphase 15 mindestens 50%, bevorzugt mindestens 70%, besonders bevorzugt mindestens 90%, beträgt, und/oder maximal 200%, bevorzugt maximal 140%, besonders bevorzugt maximal 110%, beträgt.

Sofern die Formlinge 22 und das Gas des Betriebs-Gasstrom 7 eine ähnliche spezifische Wärmekapazität haben, kann durch eine geringe Abweichung des Verhältnisses der Gesamtmasse erreicht werden, dass Wärme in der aktiven Brennphase 15 gut von dem Betriebs-Gasstrom 7 an den Formlingstapel 8 abgegeben werden kann, und in der passiven Brennphase 15 von dem Formlingstapel 8 wieder aufgenommen werden.

Weiters kann vorgesehen sein, dass vor dem Gaseinlass 3 ein Wärmespeicher zum Temperaturausgleich vorgeschaltet ist.

Besonders bevorzugt kann vorgesehen sein, dass die maximale zweite gemittelte Oberflächentemperatur während der passiven Brennphase 15 der Soll-Gastemperatur-Kurve 11 erreicht wird. Dadurch kann die Wärme in dem Besatzraum 2 des einen Chargenofens 1 besonders gut zum Brennen in dem anderen Chargenofen 1 verwendet werden. Dadurch kann beispielsweise in dem Besatzraum 2 des ersten Chargenofens 12 ein Betriebs-Gasstrom 7 geleitet werden, welcher im Wesentlichen aus Kaltluft bzw. Frischluft besteht und dieser Betriebs-Gasstrom 7 durch die Wärme der Formlinge 22 aufgeheizt werden. Dieser abgeführte Betriebs-Gasstrom 7, welcher durch die Formlinge 22 aufgeheizt wurde, kann anschließend zum Aufheizen des Besatzraum 2 des zweiten Chargenofens 13 verwendet werden. Dadurch kann Energie bei dem Betrieb der wenigstens zwei Chargenöfen 1 eingespart werden.

Besonders bevorzugt kann vorgesehen sein, dass die maximale zweite gemittelte Oberflächentemperatur in einem mittleren Drittel der passiven Brennphase 15 der Soll-Gastemperatur-Kurve 11 erreicht wird. Dadurch kann ebenfalls die Wärme in dem Besatzraum 2 des einen Chargenofens 1 besonders gut zum Brennen von Formlinge 22 in dem anderen Chargenofen 1 verwendet werden.

Besonders bevorzugt kann vorgesehen sein, dass der Brennvorgangsstartzeitpunkt des zweiten Chargenofens 13 im Wesentlichen dem Zeitpunkt des Beginns der passiven Brennphase 15 des ersten Chargenofens 12 entspricht. Dabei startet beispielsweise der Brennvorgang des zweiten Chargenofens 13, wenn bei dem ersten Chargenofen 12 die passive Brennphase 15 beginnt. Dadurch kann besonders effizient die Restwärme aus dem ersten Chargenofen 12, also die Wärme, welche die Formlinge 22 an den Betriebs-Gasstrom 7 abgegeben, für die Wärmezufuhr in den zweiten Chargenofen 13 verwendet werden.

Besonders bevorzugt kann vorgesehen sein, dass die Zeitdauer der aktiven Brennphase 14 der Soll-Gastemperatur-Kurve 11 im Wesentlichen der Zeitdauer der passiven Brennphase 15 der Soll-Gastemperatur-Kurve 11 entspricht. Dadurch können insbesondere immer drei Chargenöfen besonders energieeffizient aufeinander abgestimmt werden.

Bevorzugt kann die Soll-Gastemperatur-Kurve 11 einen zumindest teilweise trapezförmigen Verlauf umfassen. Bevorzugt kann die aktive Brennphase 14 einen trapezförmigen Verlauf aufweisen.

Bevorzugt wird in der Haltezeit 24 die Gastemperatur des Betriebs-Gasstroms 7 konstant gehalten.

Besonders bevorzugt kann vorgesehen sein, dass der individuelle Betriebs-Gasstrom 7 für jeden Chargenofen 1 gemäß derselben Soll-Gastemperatur-Kurve 11 mittels der Regeleinrichtung eingestellt wird. Dadurch kann eine besonders effiziente Abstimmung der Chargenöfen 1 aufeinander erreicht werden, wodurch ein besonders effizienter Betrieb der Chargenöfen 1 erhalten werden kann.

Besonders bevorzugt kann vorgesehen sein, dass jede Zuleitung 5 der wenigstens zwei Chargenöfen 1 mit einer Heißleitung 16, mit einer Kaltleitung 17 und über eine Rückführleitung 18 mit der jeweiligen Auslassleitung 6 verbunden sind, dass in jeder Zuleitung 5 der Betriebs-Gasstrom 7 gemäß der Soll-Gastemperatur der Soll-Gastemperatur-Kurve 11 mittels der Regeleinrichtung eingestellt wird, und dass der jeweilige Betriebs-Gasstrom 7 umfasst:
a. einen Teil eines Gasstroms aus der Heißleitung 16 und einen Teil eines Gasstroms aus der jeweiligen Auslassleitung 6, wenn die Soll-Gastemperatur zwischen der Temperatur des Gasstroms in der Heißleitung 16 und der Temperatur des Gasstroms in der jeweiligen Auslassleitung 6 ist,
   oder
b. einen Teil eines Gasstroms aus der Heißleitung 16 und einen Teil eines Gasstroms aus der jeweiligen Auslassleitung 6, wenn die Soll-Gastemperatur zumindest höher als die Temperatur des Gasstroms in der Heißleitung 16 und der Temperatur des Gasstroms in der jeweiligen Auslassleitung 6 ist, wobei der Betriebs-Gasstrom 7 vor dem Zuführen in den Besatzraum 2 mittels einer Heizvorrichtung 19 für den Chargenofen 1 auf die Soll-Gastemperatur erhitzt wird,
   oder
c. einen Teil eines Gasstroms aus der Kaltleitung 17 und einen Teil eines Gasstroms aus der jeweiligen Auslassleitung 6, wenn die Soll-Gastemperatur geringer als die Temperatur des Gasstroms in der Auslassleitung 6 ist.

Dadurch kann eine wärmetechnische Kopplung der wenigstens zwei Chargenöfen 1 über die Leitungen erreicht werden, wodurch vor allem drei Chargenöfen 1 oder eine Mehrzahl an Chargenöfen 1 besonders effizient betrieben werden können. Dadurch kann die Regeleinrichtung den Betriebs-Gasstrom 7 in der Zuleitung 5 schnell und einfach anhand der Varianten a bis c einstellen. Dadurch kann beispielsweise in der Aufheizzeit 23 die Regeleinrichtung den Betriebs-Gasstrom 7 gemäß Variante a einstellen und nach Überschreiten der Maximaltemperatur des Gasstroms in der Auslassleitung 6 des jeweiligen Chargenofens 1 und der Maximaltemperatur des Gasstroms in der Heißleitung 16 den Betriebs-Gasstrom 7 gemäß Variante b einstellen. In der Abkühlzeit 25 des jeweiligen Chargenofens 1 kann die Regeleinrichtung den Betriebs-Gasstrom 7 insbesondere gemäß Variante b oder c einstellen, je nach den Temperaturen der Gasströme in der Heißleitung 16 und der jeweiligen Auslassleitung 6.

Die Kaltleitung 17 ist bevorzugt eine Leitung, in welcher ein Gasstrom mit einer niedrigen Temperatur strömt. Bevorzugt kann die Kaltleitung 17 auch als Frischluftleitung bezeichnet werden. Beispielweise kann die Temperatur des Gasstroms in der Kaltleitung 17 einer Außentemperatur oder einer Umgebungstemperatur an dem Ort der wenigsten zwei Chargenöfen 1 entsprechen. Dabei kann beispielsweise bei dem Betrieb der wenigstens zwei Chargenöfen 1 in einer Fabrikhalle, die Luft außerhalb der Fabrikhalle angesaugt und in die Kaltleitung 17 gepumpt werden. Hierfür kann beispielsweise ein Ventilator verwendet werden.

Die Auslassleitung 6 ist bevorzugt eine Leitung, in welcher der Gasstrom strömt, der aus dem Gasauslass 4 des Besatzraums 2 abgeführt wird, also der abgeführte Betriebs-Gasstrom 7. Erfindungsgemäß steigt die Temperatur des Gasstroms in der Auslassleitung 6 mit der Zeit des Betriebs des jeweiligen Chargenofens 1 an. Dies ist beispielhaft in Fig. 1 anhand der sprichpunktierten Linie gezeigt. Bei dem in Fig. 1 gezeigten Diagramm wurde bei einem Chargenofen 1 ein geringer Randspalt zwischen den Formlingen 22 und der Besatzraumumwandung ausgebildet, sodass der Großteil des Betriebs-Gasstroms 7 gezwungen wurde durch Kanäle der Formlinge 22 zu strömen und nicht zwischen den Formlingen 22 und der Besatzraumumwandung vorbeiströmen konnte. Die Formlinge 22 waren dabei Ziegelformlinge. Wie in Fig. 1 ersichtlich ist, steigt die Temperatur des Gasstroms in der Auslassleitung 6 mit der Zeit an. In den ersten sechs gezeigten Stunden des Diagramms, also vom Beginn des Brennvorganges bis zur Stunde sechs, ist die Temperatur des Gasstroms in der Auslassleitung 6 beinahe konstant. Erst ab der sechsten Stunde steigt die Temperatur des Gasstroms in der Auslassleitung 6 an. Dabei befindet sich die gezeigte Soll-Gastemperatur-Kurve 11 bereits in der Abkühlzeit 25. Die Temperatur des Gasstroms in der Auslassleitung 6 steigt mit der Zeit noch weiter an, wobei beispielsweise nach zehn Stunden Betriebszeit des Chargenofens 1 der Chargenofen 1 in der passiven Brennphase 15 betrieben wird. In der passiven Brennphase 15 wird die Gastemperatur des Betriebs-Gasstroms 7 in der Zuleitung 5 konstant gehalten. In dieser Phase wird durch die Energie der Formlinge 22 des Formlingstapels 8 die Temperatur des Betriebs-Gasstroms 7 erhöht. Dieser abgeführte Betriebs-Gasstrom 7, also der Gasstrom in der Auslassleitung 6, kann der Heißleitung 16 zugeführt werden.

Bevorzugt ist die Heißleitung 16 eine Leitung, in welcher ein Gasstrom mit einer hohen Temperatur strömt. Die Temperatur des Gasstroms in der Heißleitung 16 ist dabei höher als die Temperatur des Gasstroms in der Kaltleitung 17.

Besonders bevorzugt kann vorgesehen sein, dass der überschüssige Gasstrom in der jeweiligen Auslassleitung 6 der wenigstens zwei Chargenöfen 1 der Heißleitung 16 zugeführt wird, wenn die Temperatur des Gasstroms in der jeweiligen Auslassleitung 6 in einem vorgebbaren Rückführ-Wertebereich liegt. Dadurch können die wenigstens zwei Chargenöfen 1 oder eine Mehrzahl an Chargenöfen 1 besonders einfach wärmetechnisch miteinander gekoppelt werden.

Der überschüssige Gasstrom ist bevorzugt der Gasstrom, welcher nicht über die Rückführleitung 18 der Zuleitung 5 zugeführt wird oder aus der Auslassleitung 6 abgeführt wird. Die Zufuhr des überschüssigen Gasstroms in die Heißleitung 16 findet vorzugsweise statt, wenn die Temperatur des Gasstroms in der jeweiligen Auslassleitung 6 in einem vorgebbaren Rückführ-Wertebereich liegt.

Bevorzugt kann in der Auslassleitung 6, insbesondere am Gasauslass 4, ein Temperatursensor angeordnet sein. Bevorzugt kann die Regeleinrichtung für die Regelung der Zufuhr des überschüssigen Gasstroms in der Auslassleitung 6 in die Heißleitung 16 den Temperatursensor in der Auslassleitung 6 verwenden.

Bevorzugt kann der vorgebbare Rückführ-Wertebereich ein Bereich zwischen mindestens Null Grad Celsius, insbesondere mindestens 200 Grad Celsius, vorzugsweise mindestens 400 Grad Celsius, besonders bevorzugt mindestens 600 Grad Celsius, und maximal 800 Grad Celsius, insbesondere maximal 600 Grad Celsius, vorzugsweise maximal 400 Grad Celsius, sein.

Besonders bevorzugt kann der überschüssige Gasstrom in der jeweiligen Auslassleitung 6 der wenigstens zwei Chargenöfen 1 der Heißleitung 16 zugeführt werden, wenn die Differenz zwischen der Temperatur des Gasstroms in der jeweiligen Auslassleitung 6 und der Temperatur des Gasstroms in der Heißleitung 16 in dem vorgebbaren Rückführ-Wertebereich liegt. Dabei ist bei der Bestimmung des Rückführ-Wertebereichs der Minuend die Temperatur des Gasstroms in der jeweiligen Auslassleitung 6 und der Subtrahend die Temperatur des Gasstroms in der Heißleitung 16. Dadurch kann sichergestellt werden, dass der Heißleitung 16 nur ein Gasstrom zugeführt wird, wenn dieser eine bestimmte Temperatur aufweist. Beispielsweise kann dadurch, wie in Fig. 1 ersichtlich, der Gasstrom in der Auslassleitung 6 in der aktiven Brennphase 14 des jeweiligen Chargenofens 1 abgeführt werden, weil der Gasstrom sonst die Temperatur des Gasstroms in der Heißleitung 16 reduzieren würde. Im Unterschied dazu kann der überschüssige Gasstrom in der Auslassleitung 6 der Heißleitung 16 in der passiven Brennphase 15 des Chargenofens 1 zugeführt werden. Beispielsweise kann hierbei der Gasstrom in der Heißleitung 16 eine Temperatur von 400 Grad Celsius aufweisen. Wie in Fig. 1 ersichtlich ist, weist die Temperatur des Gasstroms in der Auslassleitung 6 nach zehn Stunden Betriebszeit eine Temperatur von 400 Grad Celsius auf. Somit weisen der Minuend und der Subtrahend jeweils eine Temperatur von 400 Grad Celsius auf, sodass die Differenz Null ergibt. Sofern der Rückfuhr-Wertebereich beispielsweise von Null bis 200 Grad Celsius reicht, wird der Heißleitung 16 der überschüssige Gasstrom in der Auslassleitung 6 bis zu einer Temperatur des Gasstroms in der Auslassleitung 6 von 600 Grad Celsius zugeführt.

Durch das Zuführen der Wärme des Gasstroms aus der Auslassleitung 6 des jeweiligen Chargenofens 1 in die Heißleitung 16 ist die Temperatur des Gasstroms in der Heißleitung 16 nicht konstant. Daher kann der Rückführ-Wertebereich bevorzugt auch als Soll-Temperatur-Bereich der Heißleitung 16 verstanden werden. Beispielsweise derart, dass der Gasstrom in der Heißleitung 16 beispielsweise eine Soll-Temperatur von 450 Grad Celsius aufweisen soll und der überschüssige Gasstrom der Heißleitung 16 zugeführt wird, wenn dieser zwischen 400 Grad Celsius und 500 Grad Celsius ist. Dadurch kann mit dem Rückführ-Wertebereich ein Bereich von 100 Grad Celsius vorgegeben werden, sodass der Gasstrom in der Heißleitung 16 in diesem Bereich liegt und nicht durch weiteres Zuführen des überschüssigen Gasstroms aus der Auslassleitung 6 diesen Bereich überschreitet oder unterschreitet. In diesem Fall wäre der Rückführ-Wertebereich zwischen 400 Grad Celsius und 500 Grad Celsius bzw. bei der oben beschriebenen Differenz zwischen der Temperatur des Gasstroms in der jeweiligen Auslassleitung 6 und der Temperatur des Gasstroms in der Heißleitung 16 zwischen Minus 50 Grad Celsius und 50 Grad Celsius.

Bevorzugt sind die Leitungen über Ventile 28 miteinander verbunden. Dies ist beispielhaft in Fig. 3 ersichtlich. Dabei ist ersichtlich, dass die Heißleitung 16, die Rückführleitung 18 und ein Zwischenstück 29 über ein Ventil 28 miteinander verbunden sind. Weiters ist ersichtlich, dass das Zwischenstück 29 mit der Kaltleitung 17 und mit der Zuleitung 5 über ein Ventil 28 miteinander verbunden sind. Weiters ist ersichtlich, dass die Auslassleitung 6 mittels des Ventils 28 mit der Rückführleitung 18 und mit einer Abwärmeleitung 30 verbunden ist.

Bevorzugt kann das Ventil 28 ein Drei-Wege-Ventil sein.

Es ist vorgesehen, dass das System 21 die Regeleinrichtung umfasst. Bei dem erfindungsgemäßen Verfahren wird bevorzugt der Betriebs-Gasstrom 7 mittels der Regeleinrichtung eingestellt. Die Regeleinrichtung stellt dabei bevorzugt den Betriebs-Gasstrom 7 in der Zuleitung 5 gemäß einer Soll-Gastemperatur der Soll-Gastemperatur-Kurve 11 ein. In Fig. 1 ist die Soll-Gastemperatur-Kurve 11 sowie etwas zeitversetzt der Temperaturverlauf 26 der ersten gemittelten Oberflächentemperatur des Formlingstapels 8 an dem ersten Ende 9 gezeigt.

Beispielsweise kann die Temperatur des Gasstroms in der Auslassleitung 6 des ersten Chargenofens 400 Grad Celsius betragen. Wenn der zweite Chargenofen 13 gerade in der Aufheizzeit 23 ist und eine Soll-Gastemperatur der Soll-Gastemperatur-Kurve 11 beispielsweise 350 Grad Celsius ist, kann der zweite Chargenofen 13 für den Betriebs-Gasstrom 7 den Gasstrom aus der Auslassleitung 6 des ersten Chargenofens 12 bzw. aus der Heißleitung 16 verwenden. Die Regeleinrichtung stellt dabei den Betriebs-Gasstrom 7 gemäß Alternative a ein. Sofern die Soll-Gastemperatur der Soll-Gastemperatur-Kurve 11 beispielsweise bei 450 Grad Celsius ist, kann der zweite Chargenofen 13 für den Betriebs-Gasstrom 7 zwar auch den Gasstrom aus der Auslassleitung 6 des ersten Chargenofens 12 bzw. aus der Heißleitung 16 verwenden, diesen Gasstrom jedoch vor dem Zuführen in den Besatzraum 2 mittels der Heizvorrichtung 19 für den Chargenofen 1 auf die Soll-Gastemperatur erhitzen. Dabei stellt die Regeleinrichtung den Betriebs-Gasstrom 7 gemäß Alternative b ein. Der Chargenofen 1 kann hierbei jedoch auch den Gasstrom aus der Auslassleitung 6 verwenden und diesen mittels der Heizvorrichtung 19 auf die Soll-Gastemperatur erhitzen. Sobald die Soll-Gastemperatur niedriger als die Temperatur des Gasstroms in der Auslassleitung 6 ist, kann die Regeleinrichtung den Betriebs-Gasstrom 7 gemäß Variante c einstellen. Dies ist beispielsweise in Fig. 1 in der Abkühlzeit 25 der Fall. Zu Beginn der Abkühlzeit 25 kann die Soll-Gastemperatur noch durch eine Mischung der Gasströme aus der Auslassleitung 6 und aus der Heißleitung 16 erreicht werden, wobei erforderlichenfalls mittels der Heizvorrichtung 19 zugeheizt wird. Sobald jedoch der Gasstrom in der Auslassleitung 6 zu heiß wird, kann die Soll-Gastemperatur ohne Teil eines Gasstroms aus der Kaltleitung 17 nicht mehr erreicht werden. Daher stellt die Regeleinrichtung den Betriebs-Gasstrom 7 gemäß Variante c ein.

Besonders bevorzugt kann vorgesehen sein, dass die wenigstens zwei Chargenöfen 1 einen dritten Chargenofen 20 umfassen, dass der Brennvorgangsstartzeitpunkt des dritten Chargenofens 20 später als der Brennvorgangsstartzeitpunkt des zweiten Chargenofens 13 gewählt wird, dass die Auslassleitung 6 des zweiten Chargenofens 13 mit der Zuleitung 5 des dritten Chargenofens 20 verbunden ist, dass die Auslassleitung 6 des dritten Chargenofens 20 mit der Zuleitung 5 des ersten Chargenofens 12 verbunden ist, dass der dritte Chargenofen 20 zumindest zeitweise einen Teil des abgeführten Betriebs-Gasstroms 7 aus der Auslassleitung 6 des zweiten Chargenofens 13 verwendet, dass der erste Chargenofen 12 bei einem weiteren Brennvorgang zumindest zeitweise einen Teil des abgeführten Betriebs-Gasstroms 7 aus der Auslassleitung 6 des dritten Chargenofens 20 verwendet. Dadurch ergibt sich der Vorteil, dass drei Chargenöfen 1 abwechselnd bzw. alternierend betrieben werden können, wodurch immer zwei Chargenöfen 1 betrieben werden und ein Chargenofen 1 beladen werden kann. Dadurch kann bei dem Betrieb von drei Chargenöfen 1 eine ähnliche Energieeffizienz wie bei einem kontinuierlich betriebenen Ofen erreicht werden.

Dabei ist vorgesehen, dass der dritte Chargenofen 20 gleichartig zu dem ersten 12 und dem zweiten 13 Chargenofen ausgebildet ist. Gleichartig bedeutet in diesem Kontext, dass die Leitungen und Öffnungen, wie der Gaseinlass 3 und der Gasauslass 4, welcher der erste Chargenofen 12 und der zweite Chargenofen 13 aufweisen sowie die beiden Chargenöfen 1 miteinander verbindet, auch der dritte Chargenofen 20 aufweist.

Besonders bevorzugt kann vorgesehen sein, dass wenigstens drei Chargenöfen 1 mit jeweils einen Besatzraum 2 betrieben werden, dass der erste Chargenofen 12 der drei Chargenöfen 1 einen Beladezustand aufweist, dass der zweite Chargenofen 13 der drei Chargenöfen 1 in der aktiven Brennphase 14 betrieben wird und dass der dritte Chargenofen 20 der drei Chargenöfen 1 in der passiven Brennphase 15 betrieben wird. Dadurch können die drei oder auch mehr Chargenöfen 1 besonders energieeffizient betrieben werden, da die Abwärme beim Kühlen der Formlinge 22 in der passiven Brennphase 15 eines Chargenofens 1 zum Erhitzen des Besatzraums 2 des anderen Chargenofens 1 verwendet werden kann. Hierbei kann besonders bevorzugt die Zeit der aktiven Brennphase 14, der passiven Brennphase 15 und des Beladevorgangs im Wesentlichen gleich sein.

Der Betrieb der wenigstens drei Chargenöfen 1 kann dabei anhand von Fig. 3 mit der Heißleitung 16 und Fig. 4 wie folgt verstanden werden. Fig. 4 zeigt ein zweites Temperatur-Zeit-Diagramm für den Betrieb von drei Chargenöfen 1 in schematischer Darstellung. Der erste Chargenofen 12 befindet sich in Fig. 3 zum Zeitpunkt Null im Beladezustand, sodass der Besatzraum 2 dieses Chargenofens 1 mit Formlingen 22 bestückt oder die Formlinge 22 aus dem Besatzraum 2 entfernt werden können. Bei dem ersten Chargenofen 12 wird daher kein Betriebs-Gasstrom 7 über die Zuleitung 5 zugeführt. Der dritte Chargenofen 20 befindet sich zum Zeitpunkt Null am Anfang der passiven Brennphase 15. Dabei ist, wie in Fig. 1 ersichtlich ist, die Temperatur des Gasstroms in der Auslassleitung 6 höher als die Soll-Gastemperatur, sodass der Betriebs-Gasstrom 7 lediglich einen Teil eines Gasstroms aus der Kaltleitung 17 des Besatzraums 2 zugeführt wird. Sobald die Temperatur des Gasstroms in der Auslassleitung 6 in dem vorgebbaren Rückführ-Wertebereich liegt, wird der Gasstrom in der Auslassleitung 6 der Heißleitung 16 zugeführt. Der zweite Chargenofen 13 befindet sich zum Zeitpunkt Null am Anfang der aktiven Brennphase 14, wobei dieser im weiteren Verlauf den der Heißleitung 16 zugeführten Gasstrom des dritten Chargenofens 20 verwenden kann. Dadurch kann ein großer Teil einer freiwerdenden Wärme in dem dritten Chargenofen 20 von dem zweiten Chargenofen 13 verwendet werden und die drei Chargenöfen 1 besonders effizient betrieben werden. Die Nutzung dieser freiwerdenden Wärme ist dabei in Fig. 4 mit den senkrechten Pfeilen beispielhaft gezeigt. Sobald der zweite Chargenofen 13 die passive Brennphase 15 erreicht, startet der erste Chargenofen 12 die aktive Brennphase 14 und der dritte Chargenofen 20 geht in den Beladezustand, usw. Wie anhand dieses Beispiels ersichtlich ist, wird bei dem Betrieb von wenigstens drei Chargenöfen 1 keine externe Bereitstellung eines Gasstroms für die Heißleitung 16, beispielsweise über eine externe Heizung und einen externen Ventilator oder über eine Fernwärmeleitung, benötigt, da der Gasstrom in der Heißleitung 16 von dem Chargenofen 1 in der passiven Brennphase 15 zugeführt wird.

Erfindungsgemäß umfasst das System 21 wenigstens zwei Chargenöfen. Es kann jedoch bevorzugt vorgesehen sein, dass das System 21 neben einem ersten Chargenofen 12, einem zweiten Chargenofen 13 und einem dritten Chargenofen 20 noch weitere Chargenöfen 1 umfasst.

Bevorzugt kann vorgesehen sein, dass das System 21 eine erste Mitteltemperaturleitung 31 umfasst. Dies ist beispielhaft in Fig. 5 gezeigt, wobei die Heißleitung 16 und die erste Mitteltemperaturleitung 31 ersichtlich sind.

Bevorzugt ist die erste Mitteltemperaturleitung 31 eine Leitung, in welcher ein Gasstrom mit einer mittleren Temperatur, insbesondere einer Temperatur des Gasstroms, welche Temperatur zwischen der Temperatur des Gasstroms in der Kaltleitung 17 und der Temperatur des Gasstroms in der Heißleitung 16 liegt, strömt.

Bevorzugt kann der überschüssige Gasstrom in der jeweiligen Auslassleitung 6 der wenigstens zwei Chargenöfen 1 der ersten Mitteltemperaturleitung 31 zugeführt werden, wenn die Temperatur des Gasstroms in der jeweiligen Auslassleitung 6 in einem vorgebbaren weiteren Rückführ-Wertebereich liegt. Beispielsweise kann der Gasstrom in der jeweiligen Auslassleitung 6 der ersten Mitteltemperaturleitung 31 zugeführt werden, wenn die Temperatur des Gasstroms in der Auslassleitung 6 zwischen 200 Grad Celsius und 400 Grad Celsius liegt und der Heißleitung 16 zugeführt werden, wenn die Temperatur des Gasstroms zwischen größer 400 Grad Celsius und 800 Grad Celsius liegt, wobei hierbei auch anstatt 800 Grad Celsius mathematisch betrachtet "unendlich" gewählt werden kann.

In Fig. 5 ist eine bevorzugte Ausführungsform des Systems 21 mit fünf Chargenöfen 1, der Heißleitung 16 und der ersten Mitteltemperaturleitung 31 beispielhaft gezeigt, wobei die einzelnen Chargenöfen 1 über die gezeigten Leitungen, insbesondere die Heißleitung 16, die erste Mitteltemperaturleitung 31, die Kaltleitung 17 und die Abwärmeleitung 30 miteinander gekoppelt sind. Dabei kann durch die Steuerung der aktiven Brennphasen 14 der einzelnen Chargenöfen 1 erreicht werden, dass immer ein Chargenofen 1 in der passiven Brennphase 15 betrieben wird, während ein anderer Chargenofen 1 in der aktiven Brennphase 14 betrieben wird. Dadurch können die Chargenöfen 1 besonders energieeffizient betrieben werden. Die nicht genutzte Wärme der Chargenöfen 1 kann dabei über die gemeinsame Abwärmeleitung 30 der Chargenöfen 1 abgeführt werden.

Im Fall von fünf Chargenöfen, wie dies in Fig. 5 gezeigt ist, kann bevorzugt vorgesehen sein, dass die Zeit im Beladezustand des jeweiligen Chargenofens 1 der Hälfte der Zeit der aktiven Brennphase 14 und/oder der Hälfte der Zeit der passiven Brennphase 15 des jeweiligen Chargenofens 1 entspricht. In diesem Fall kann, wenn alle Chargenöfen dieselbe Zeitdauer für die jeweilige aktive Brennphase 14 und die jeweilige passive Brennphase 15 vorsehen, erreicht werden, dass immer gleichzeitig ein Chargenofen 1 in der aktiven Brennphase 14 und ein Chargenofen 1 in der passiven Brennphase 15 sind. Weiters kann dadurch erreicht werden, dass der eine in der aktiven Brennphase 14 befindliche Chargenofen 1 derart lange in der aktiven Brennphase 14 ist, wie der andere Chargenofen 1 in der passiven Brennphase 15 ist, sodass immer die Abwärme eines Chargenofens 1 für einen anderen Chargenofen 1 verwendet werden kann.

In Fig. 6 ist eine schematische Darstellung des Systems 21 umfassend mehrere Chargenöfen 1, eine Heißleitung 16, eine erste Mitteltemperaturleitung 31 und eine zweite Mitteltemperaturleitung 33 beispielhaft gezeigt. Die Fig. 6 zeigt dabei eine stark vereinfachte Darstellung. Es ist ersichtlich, dass die einzelnen Chargenöfen 1 über die drei Leitungen 16, 31, 33 miteinander wärmetechnisch gekoppelt sind, sodass jeder Chargenofen 1 einen Gasstrom in die drei Leitungen 16, 31, 33 einspeisen oder auch darauf beziehen kann. Die drei gezeigten Leitungen 16, 31, 33 auf der linken Seite von Fig. 6, also die Heißleitung 16, die erste Mitteltemperaturleitung 31 und die zweite Mitteltemperaturleitung 33, aus die die Chargenöfen 1 einen Gasstrom beziehen können, sind dabei dieselben Leitungen 16, 31, 33 in die die Chargenöfen 1 einspeisen können, also welche auf der rechten Seite von Fig. 6 dargestellt sind.

Bevorzugt ist die zweite Mitteltemperaturleitung 33 eine Leitung, in welcher wie in der ersten Mitteltemperaturleitung 31 ein Gasstrom mit einer zweiten mittleren Temperatur strömt. Die Temperatur des Gasstroms in der zweiten Mitteltemperarturleitung 33 ist dabei zwischen der Temperatur des Gasstroms in der Kaltleitung 17 und der Temperatur des Gasstroms in der ersten Mitteltemperaturleitung 31. Die zweite Mitteltemperaturleitung 33 kann auch als Niedertemperaturleitung bezeichnet werden.

Bevorzugt kann jeder Chargenofen 1, insbesondere der Besatzraum 2, mit einer Druckausgleichsleitung 34 verbunden sein.

Bevorzugt kann die Druckausgleichsleitung 34 mit der Heißleitung 16 und/oder der ersten Mitteltemperaturleitung 31 und/oder der zweiten Mitteltemperaturleitung 33 verbunden sein.

Bevorzugt kann die Druckausgleichsleitung 34 eine Armatur 35, insbesondere ein Absperrventil oder ein Druckausgleichsventil, umfassen. Dadurch kann bevorzugt der Druck in der Heißleitung 16, der ersten Mitteltemperaturleitung 31 und der zweiten Mitteltemperaturleitung 33 eingestellt werden, sodass beispielsweise ein Überdruck in der Heißleitung 16 mittels der Armatur 35 reduziert werden kann. Die Druckausgleichsleitung 34 und die Armatur 35 sind beispielhaft in den Fig. 3 und 5 ersichtlich.

Bevorzugt kann die Heizvorrichtung 19 eine elektrische Heizung oder eine Gasheizung sein. Einer Fachperson sind Heizvorrichtungen 19 für den erfindungsgemäßen Gebrauch, also zum Erhitzen des Betrieb-Gasstroms 7 vor dem Zuführen des Besatzraums 2, bekannt, sodass auf eine detailliertere Beschreibung der Heizvorrichtung 19 an dieser Stelle verzichtet wird.

Bevorzugt ist die Heizvorrichtung 19 in der Zuleitung 5 angeordnet. Dadurch kann der Gasstrom aus den Leitungen, insbesondere aus der Heißleitung 16 und der jeweiligen Auslassleitung 6, erforderlichenfalls in der Zuleitung 5 auf den Betriebs-Gasstrom 7 erhitzt und anschließend dem Besatzraum 2 zugeführt werden.

Bevorzugt kann jeder Chargenofen 1 der wenigstens zwei Chargenöfen 1 einen Ventilator 36 für das Zuführen des Betriebs-Gasstroms 7 in den Besatzraum 2 umfassen. Der Ventilator 36 ist beispielhaft in den Fig. 3 und 5 gezeigt.

Wie oben bereits dargelegt wurde, kann bei mehreren Chargenöfen 1 ein Chargenofen 1 die Wärme eines anderen Chargenofens 1 für die jeweilige aktive Brennphase 14 nutzen. Bevorzugt kann jedoch auch vorgesehen sein, dass mittels einer in den Fig. 1 bis 6 nicht gezeigten Heizvorrichtung und einem Ventilator ein Gasstrom für die Heißleitung 16 und/oder die erste Mitteltemperaturleitung 31 und/oder der zweiten Mitteltemperaturleitung 33 erzeugt und zugeführt werden. Beispielsweise kann hierbei auch der Gasstrom in der Heißleitung 16 und/oder der ersten Mitteltemperaturleitung 31 und/oder der zweiten Mitteltemperaturleitung 33 aus einer Fernwärmeleitung zugeführt werden.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Verfahren zum Betreiben von wenigstens zwei Chargenöfen (1),
- wobei jeder der wenigstens zwei Chargenöfen (1) jeweils einen Besatzraum (2) mit einem Gaseinlass (3) und einem Gasauslass (4), eine mit dem Gaseinlass (3) verbundene Zuleitung (5) und eine mit dem Gasauslass (4) verbundene Auslassleitung (6) umfasst,
- wobei jedem der Chargenöfen (1) jeweils während eines Brennvorgangs ein individueller Betriebs-Gasstrom (7) über die jeweilige Zuleitung (5) zugeführt wird, wobei der Betriebs-Gasstrom (7) durch einen in dem Besatzraum (2) angeordneten Formlingstapel (8) strömt und mit dem Formlingstapel (8) Wärme austauscht, wobei der Formlingstapel (8) eine erste gemittelte Oberflächentemperatur an einem dem Gaseinlass (3) zugewandten ersten Ende (9) und eine zweite gemittelte Oberflächentemperatur an einem dem Gasauslass (4) zugewandten zweiten Ende (10) aufweist, wobei die Ausbildung des Formlingstapels (8) derart gewählt wird, dass die maximale zweite gemittelte Oberflächentemperatur um eine vorgebbare Brennvorgangszeit später als die maximale erste gemittelte Oberflächentemperatur erreicht wird, wobei der Brennvorgang in jedem der Chargenöfen (1) zu einem individuellen Brennvorgangstartzeitpunkt gestartet wird,
- wobei die wenigstens zwei Chargenöfen (1) einen ersten Chargenofen (12) und einen zweiten Chargenofen (13) umfassen,
- wobei der Brennvorgangsstartzeitpunkt des zweiten Chargenofens (13) später als der Brennvorgangsstartzeitpunkt des ersten Chargenofens (12) gewählt wird,
- wobei die Auslassleitung (6) des ersten Chargenofens (12) mit der Zuleitung (5) des zweiten Chargenofens (13) verbunden ist,
- wobei der zweite Chargenofen (13) zumindest zeitweise einen Teil des abgeführten Betriebs-Gasstroms (7) aus der Auslassleitung (6) des ersten Chargenofens (12) verwendet.

2. Verfahren nach Anspruch 1, **dadurch gekennzeichnet, dass** der individuelle Betriebs-Gasstrom (7) für jeden Chargenofen (1) gemäß einer Soll-Gastemperatur einer Soll-Gastemperatur-Kurve (11) mittels einer Regeleinrichtung eingestellt wird und die Soll-Gastemperatur-Kurve (11) eine aktive Brennphase (14) und eine passive Brennphase (15) umfasst.

3. Verfahren nach Anspruch 2, **dadurch gekennzeichnet, dass** die maximale zweite gemittelte Oberflächentemperatur während der passiven Brennphase (15) der Soll-Gastemperatur-Kurve (11) erreicht wird.

4. Verfahren nach Anspruch 2 oder 3, **dadurch gekennzeichnet, dass** die maximale zweite gemittelte Oberflächentemperatur in einem mittleren Drittel der passiven Brennphase (15) der Soll-Gastemperatur-Kurve (11) erreicht wird.

5. Verfahren nach einem der Ansprüche 2 bis 4, **dadurch gekennzeichnet, dass** der Brennvorgangsstartzeitpunkt des zweiten Chargenofens (13) im Wesentlichen dem Zeitpunkt des Beginns der passiven Brennphase (15) des ersten Chargenofens (12) entspricht.

6. Verfahren nach einem der Ansprüche 2 bis 5, **dadurch gekennzeichnet, dass** die Zeitdauer der aktiven Brennphase (14) der Soll-Gastemperatur-Kurve (11) im Wesentlichen der Zeitdauer der passiven Brennphase (15) der Soll-Gastemperatur-Kurve (11) entspricht.

7. Verfahren nach einem der Ansprüche 2 bis 6, **dadurch gekennzeichnet, dass** der individuelle Betriebs-Gasstrom (7) für jeden Chargenofen (1) gemäß derselben Soll-Gastemperatur-Kurve (11) mittels der Regeleinrichtung eingestellt wird.

8. Verfahren nach einem der Ansprüche 2 bis 7, **dadurch gekennzeichnet, dass** jede Zuleitung (5) der wenigstens zwei Chargenöfen (1) mit einer Heißleitung (16), mit einer Kaltleitung (17) und über eine Rückführleitung (18) mit der jeweiligen Auslassleitung (6) verbunden sind, dass in jeder Zuleitung (5) der Betriebs-Gasstrom (7) gemäß der Soll-Gastemperatur der Soll-Gastemperatur-Kurve (11) mittels der Regeleinrichtung eingestellt wird, und dass der jeweilige Betriebs-Gasstrom (7) umfasst:
a. einen Teil eines Gasstroms aus der Heißleitung (16) und einen Teil eines Gasstroms aus der jeweiligen Auslassleitung (6), wenn die Soll-Gastemperatur zwischen der Temperatur des Gasstroms in der Heißleitung (16) und der Temperatur des Gasstroms in der jeweiligen Auslassleitung (6) ist,
oder
b. einen Teil eines Gasstroms aus der Heißleitung (16) und einen Teil eines Gasstroms aus der jeweiligen Auslassleitung (6), wenn die Soll-Gastemperatur höher als die Temperatur des Gasstroms in der Heißleitung (16) und der Temperatur des Gasstroms in der jeweiligen Auslassleitung (6) ist, wobei der Betriebs-Gasstrom (7) vor dem Zuführen in den Besatzraum (2) mittels einer Heizvorrichtung (19) für den Chargenofen (1) auf die Soll-Gastemperatur erhitzt wird,
oder
c. einen Teil eines Gasstroms aus der Kaltleitung (17) und einen Teil eines Gasstroms aus der jeweiligen Auslassleitung (6), wenn die Soll-Gastemperatur geringer als die Temperatur des Gasstroms in der Auslassleitung (6) ist.

9. Verfahren nach Anspruch 8, **dadurch gekennzeichnet, dass** der überschüssige Gasstrom in der jeweiligen Auslassleitung (6) der wenigstens zwei Chargenöfen (1) der Heißleitung (16) zugeführt wird, wenn die Temperatur des Gasstroms in der jeweiligen Auslassleitung (6) in einem vorgebbaren Rückführ-Wertebereich liegt.

10. Verfahren nach einem der Ansprüche 2 bis 9, **dadurch gekennzeichnet, dass** die wenigstens zwei Chargenöfen (1) einen dritten Chargenofen (20) umfassen, dass der Brennvorgangsstartzeitpunkt des dritten Chargenofens (20) später als der Brennvorgangsstartzeitpunkt des zweiten Chargenofens (13) gewählt wird, dass die Auslassleitung (6) des zweiten Chargenofens (13) mit der Zuleitung (5) des dritten Chargenofens (20) verbunden ist, dass die Auslassleitung (6) des dritten Chargenofens (20) mit der Zuleitung (5) des ersten Chargenofens (12) verbunden ist, dass der dritte Chargenofen (20) zumindest zeitweise einen Teil des abgeführten Betriebs-Gasstroms (7) aus der Auslassleitung (6) des zweiten Chargenofens (13) verwendet, dass der erste Chargenofen (12) bei einem weiteren Brennvorgang zumindest zeitweise einen Teil des abgeführten Betriebs-Gasstroms (7) aus der Auslassleitung (6) des dritten Chargenofens (20) verwendet.

11. System (21) umfassend wenigstens zwei Chargenöfen (1) und eine Regeleinrichtung, wobei jeder der wenigstens zwei Chargenöfen (1) jeweils einen Besatzraum (2) mit einem Gaseinlass (3) und einem Gasauslass (4), eine mit dem Gaseinlass (3) verbundene Zuleitung (5) und eine mit dem Gasauslass (4) verbundene Auslassleitung (6) umfasst, wobei die Auslassleitung (6) eines ersten Chargenofens (12) der wenigstens zwei Chargenöfen (1) mit der Zuleitung (5) eines zweiten Chargenofens (13) der wenigstens zwei Chargenöfen (1) verbunden ist, wobei die Regeleinrichtung dazu ausgebildet ist die wenigstens zwei Chargenöfen (1) nach einem Verfahren gemäß der Ansprüche 1 bis 10 zu betreiben.
